# EUROPEAN PATENT APPLICATION

(11) **EP 1 713 280 A2**
(43) Date of publication of application: **18.10.2006**
(21) Application number: 06112317.0
(22) Date of filing: 06.04.2006
(51) Int. Cl.: H04N 7/26, H04N 7/50, G11B 27/00

(54) **Scalable video coding**

(30) Priority: 14.04.2005 KR 20050031114
(71) Applicant: Samsung Electronics Co., Ltd., Suwon-si, Gyeonggi-Do (KR)
(72) Inventor: Ryu, Kwang-yuel, Gyeonggi-do (KR); Park, Min-kyu, Seoul (KR); Suh, Doug-young, Seongnam-si, Gyeonggi-do (KR)
(74) Representative: Derry, Paul Stefan

(57) **Abstract**

Video encoding and decoding apparatuses and methods capable of minimising a random access delay are provided. The video encoding apparatus includes an encoding control unit which sets an intra frame (I-frame) interval of a base layer shorter than an I-frame interval of an enhancement layer, a base layer encoding unit which generates a base layer bitstream by reducing and encoding an original image according to the I-frame intervals set by the encoding control unit, and an enhancement layer encoding unit which generates an enhancement layer bitstream by decoding an enhancement layer image which is not temporally aligned with the base layer bitstream and referring to a predetermined image obtained by decoding the base layer bitstream and enlarging the decoded result.

## Description

The present invention relates to a video encoding, and it relates to video decoding.

Three operations are used in current video compression standards such as MPEG2, MPEG4, H.263, and H264 in order to enhance data compression efficiency.

First, red, green, and blue (RGB) components of an input colour image or a luminance component Y and two colour difference components Cb and Cr are converted into YCbCr data.

Second, spatial redundancy is eliminated from a single picture through discrete cosine transformation (DCT), quantisation (Q), or variable length coding (VLC).

Third, temporal redundancy of a plurality of consecutive frames is eliminated based on the assumption that parts of a plurality of temporally consecutive frames are likely to be redundant. The elimination of temporal redundancy of a plurality of consecutive frames may be carried out using a prediction method, such as differential pulse code modulation (DPCM), based on a motion vector obtained from motion estimation.

Figure 1 is a diagram illustrating how intraframes (I frames), predictive frame (P frames), and bi-directional predictive frames (B frames) are arranged in a conventional single layer encoding method, and how the I, P, and B frames refer to one another when encoded in the conventional single layer encoding method.

Figure 2 is a block diagram for explaining a conventional spatial layer encoding method.

Image data can be encoded as two separate bitstreams by using two encoding methods. One method is a base layer encoding method in which the image data is down-sampled to one fourth or one sixteenth of its original size and the result of the down-sampling operation is encoded. The other method is an enhancement layer encoding method in which the image data is encoded by using differences between the image data and image data restored from a base layer bitstream without the need to down-sample the image data.

In order to generate an enhancement layer bitstream, inverse quantisation (IQ) and inverse DCT (IDCT) are performed on image data that has been quantised at a base layer, thereby restoring image data to the same size as the original image data. Thereafter, differences between the restored image data and the original image data are calculated. Then, the differences are added to the original image data, and DCT, Q, and VLC are performed on the addition result in the same order as in a base layer encoding method, thereby obtaining an enhancement layer bitstream.

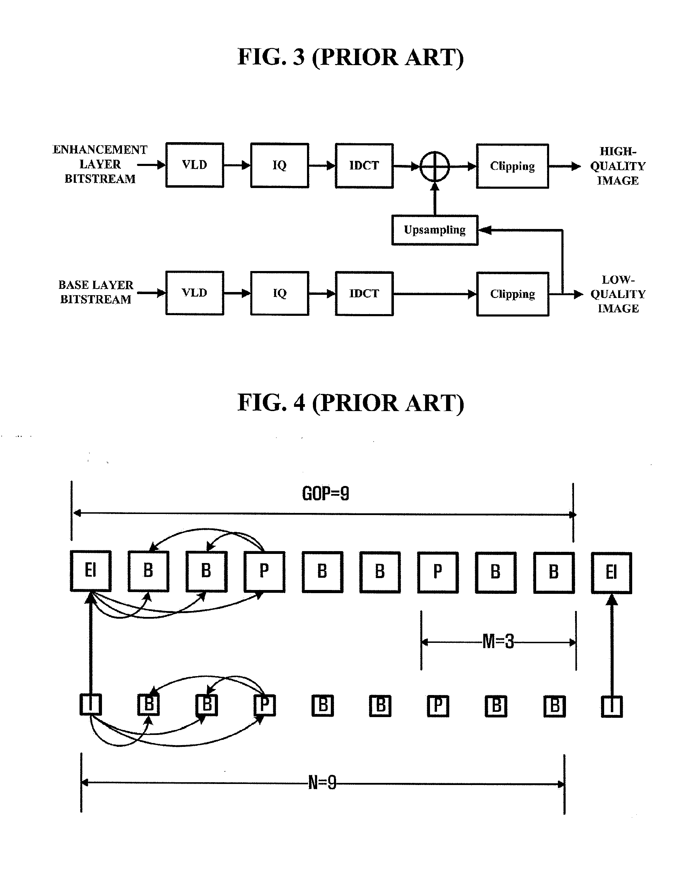

Figure 3 is a block diagram for explaining a conventional spatial layer decoding method. A base layer bitstream is converted into data to be inversely quantised through variable length decoding (VLD), and then is inversely quantised, thereby restoring image data. Q and IQ are transformations having an accompanying data loss, and thus, the restored image data obtained from IQ is different from the original image data. The differences between the restored image data obtained from IQ and the original image data lead to a difference between the picture quality of the restored image data obtained from IQ and the picture quality of the original image data. If image data is quantised in such a manner that a difference between the picture quality of the image data yet to be quantised and the picture quality of the quantised image data is maximised, the efficiency of compressing the image data may be maximised. On the other hand, if the image data is quantised in such a manner that the difference between the picture quality of the image data yet to be quantised and the picture quality of the quantised image data is minimised, the efficiency of compressing the image data may be minimised. Therefore, the picture quality of image data and the efficiency of compressing the image data are determined when the image data is quantised. IDCT is performed on the restored image data obtained from IQ so that frequency-domain image data is converted into image-domain image data.

An enhancement layer bitstream is decoded basically in the same manner as a base layer bitstream. Image data restored from a base-layer-encoded-bitstream is up-sampled. Thereafter, image data obtained by performing VLD, IQ, and IDCT on an enhancement layer level is added to the up-sampling result, thereby restoring the original image data. The restoration result may not be the same as the original image data. Image data decoded from an enhancement layer bitstream generally has a higher picture quality than image data decoded from a base layer bitstream.

Figure 4 is a diagram illustrating how I, P, and B frames are arranged in a conventional spatial layer encoding method and how the I, P, and B frames relate to one another when encoded in the conventional spatial layer encoding method. In general, an I frame of a base layer is arranged on the same time axis as an I frame of an enhancement layer, and P and B frames of the base layer are arranged on the same time axes as P and B frames, respectively, of the enhancement layer.

In a single layer encoding method and a spatial layer encoding method, image data is encoded so that the encoded result begins with an I frame followed by a plurality of P and B frames, thereby reducing the bit rate. If the encoded result consists only of P and B frames, it might not be possible to fully restore the image data when an error occurs therein. In addition, if the encoded result consists only of P and B frames, decoding might not be possible during random access. Therefore, more than one I frame is inserted into the encoded result, and this process is referred to as intra refresh. An intra refresh operation is performed every fifteen frames of the encoded result. Thus, a random access delay of up to 0.5 seconds may be created when encoding a moving image with a frame rate of thirty frames per second using an intra refresh method. This random access delay may also be created when broadcasting the moving image or when storing the moving image in a storage device and reproducing the moving image from the storage device.

Referring to Figure 4, in the spatial layer encoding method, an I frame of a base layer and an I frame of an enhancement layer are located on the same time axis. Thus, the bit rate at the time axis where the I frames of the base layer and the enhancement layer coexist may become excessively high. In general, a bit rate ratio among I, P, and B frames is about 8:3:2. However, in the spatial layer encoding method, an I frame of the base layer and a corresponding I frame of the enhancement layer are temporally redundant, and thus, the bit rate for these I frames may become excessively high compared to bit rates for other frames.

The present invention aims to provides a video encoding/decoding apparatus and method by which random access delay of a moving image service can be minimised and/or the bit rate of a bitstream obtained from spatial layer encoding can become regular. In the embodiments. This is achieved by setting the I-frame interval of a base layer shorter than the I-frame interval of an enhancement layer.

An aspect of the present invention provides a video encoding apparatus capable of minimising a random access delay, the video encoding apparatus including an encoding control unit which may set an intra frame (I-frame) interval of a base layer shorter than an I-frame interval of an enhancement layer, a base layer encoding unit which may generate a base layer bitstream by reducing and encoding an original image according to the I-frame intervals set by the encoding control unit, and an enhancement layer encoding unit which may generate an enhancement layer bitstream by decoding an enhancement layer image which is not temporally aligned with the base layer bitstream and referring to a predetermined image obtained by decoding the base layer bitstream and enlarging the decoded result. The video encoding apparatus may further include a transmission unit which may multiplex the base layer bitstream and the enhancement layer bitstream according to the I-frame intervals set by the encoding control unit or give different priority levels to the base layer bitstream and the enhancement layer bitstream and transmits the base layer bitstream and the enhancement layer bitstream according to the priority levels of the base layer bitstream and the enhancement layer bitstream.

Another aspect of the present invention provides a video decoding apparatus capable of minimising a random access delay including a first base layer decoding unit which may decode a base layer bitstream and enlarge the decoded base layer bitstream to the size of a corresponding original image, an enhancement layer decoding unit which may decode an enhancement layer image which is temporally different from the base layer bitstream by referring to the enlarged result, and a decoding control unit which may control the enlarged result to be reproduced until an I frame of the decoded enhancement layer image is reproduced and control the decoded enhancement layer image to be displayed when the I frame of the decoded enhancement layer image is reproduced. The video decoding apparatus may further include a second base layer decoding unit which may decode a base layer image of a channel other than the channel of the base layer bitstream decoded by the first base layer decoding unit while the first base layer decoding unit decodes the base layer bitstream so that the base layer image decoded by the second base layer decoding unit is displayed within the base layer bitstream decoded by the first base layer decoding unit.

Another aspect of the present invention provides a video encoding method capable of minimising a random access delay including setting an I-frame interval of a base layer shorter than an I-frame interval of an enhancement layer, generating a base layer bitstream by reducing and encoding an original image according to the I-frame intervals of the base layer and the enhancement layer, and generating an enhancement layer bitstream by decoding an enhancement layer image which is temporally different from the base layer bitstream and referring to a predetermined image obtained by decoding the base layer bitstream and enlarging the decoded result. Preferably, the video encoding method further includes transmitting the base layer bitstream and the enhancement layer bitstream to a decoder side by multiplexing the same the base layer bitstream and the enhancement layer bitstream according to the set I-frame intervals or giving different priority levels thereto.

According to yet another aspect of the present invention, there is provided a video decoding method capable of minimising a random access delay including decoding a base layer bitstream and enlarging the decoded base layer bitstream to the size of a corresponding original image, decoding an enhancement layer image which is temporally different from the base layer bitstream by referring to the enlarged result, and controlling the enlarged result to be reproduced until an I frame of the decoded enhancement layer image is reproduced and controlling the decoded enhancement layer image to be displayed when the I frame of the decoded enhancement layer image is reproduced. Preferably, the video decoding method further includes decoding a base layer image of a channel other than the current channel of the base layer bitstream so that the base layer image is displayed within the base layer bitstream.

The invention can allow reduction in delay in random access, and more particularly, in which the amount of time taken to display a new frame after a channel switch can be reduced when receiving a video streaming service or reproducing a compressed moving image.

The invention will now be described by way of example with reference to the accompanying drawings in which:

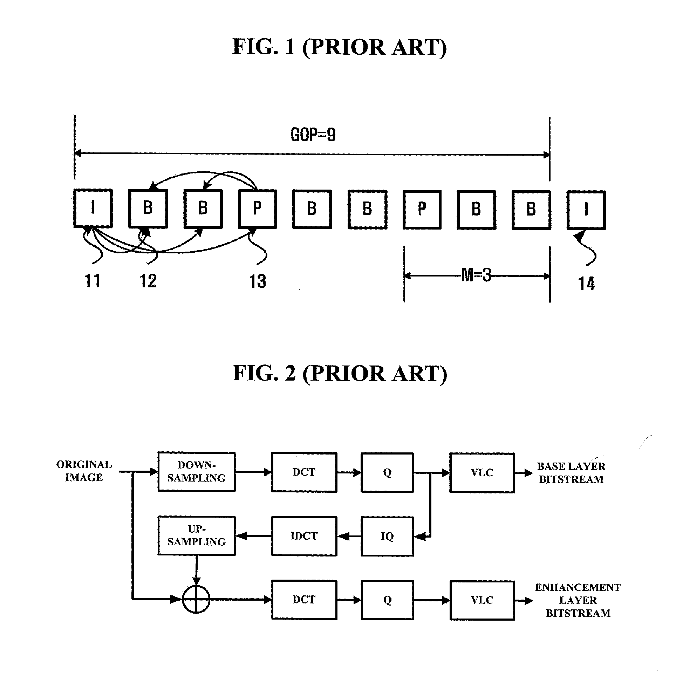

Figure 1 is a diagram illustrating how I, P, and B frames are arranged in a conventional single layer encoding method and how the I, P, and B frames reference one another when encoded in the conventional single layer encoding method;
Figure 2 is a block diagram for explaining a conventional spatial layer encoding method;
Figure 3 is a block diagram for explaining a conventional spatial layer decoding method;
Figure 4 is a diagram illustrating how I, P, and B frames are arranged in a conventional spatial layer encoding method and how the I, P, and B frames reference one another when encoded in the conventional spatial layer encoding method;

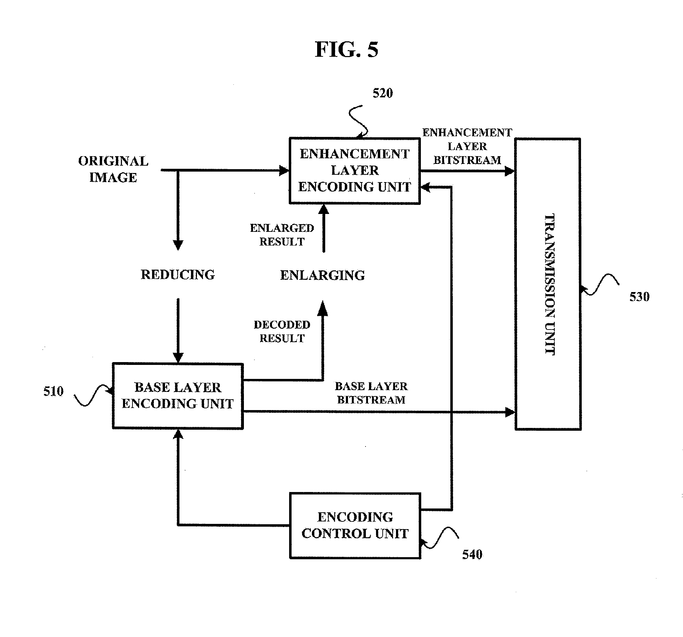

Figure 5 is a block diagram of a video encoding apparatus according to the present invention, which is capable of minimising a delay in random access;

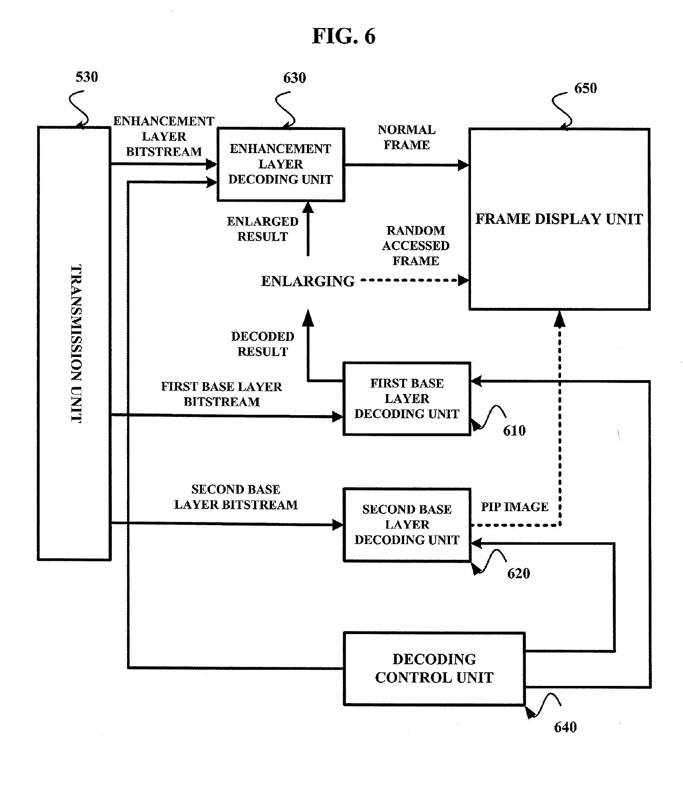

Figure 6 is a block diagram of a video decoding apparatus according to the present invention, which is capable of minimising a delay in random access;

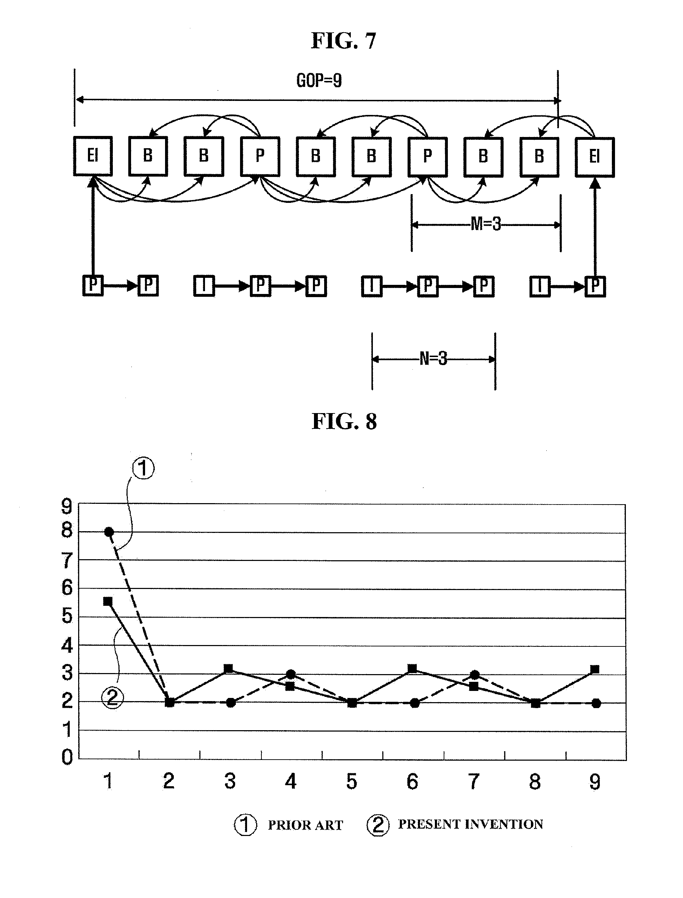

Figure 7 is a diagram illustrating how I, P, and B frames are arranged in a video encoding method according to the present invention, which is capable of minimising a delay in random access, and how the I, P, and B frames reference one another when encoded in the video encoding method;
Figure 8 is a graph for comparing bit rates obtained using a video encoding method according to the present invention with bit rates obtained using a conventional spatial layer encoding method;

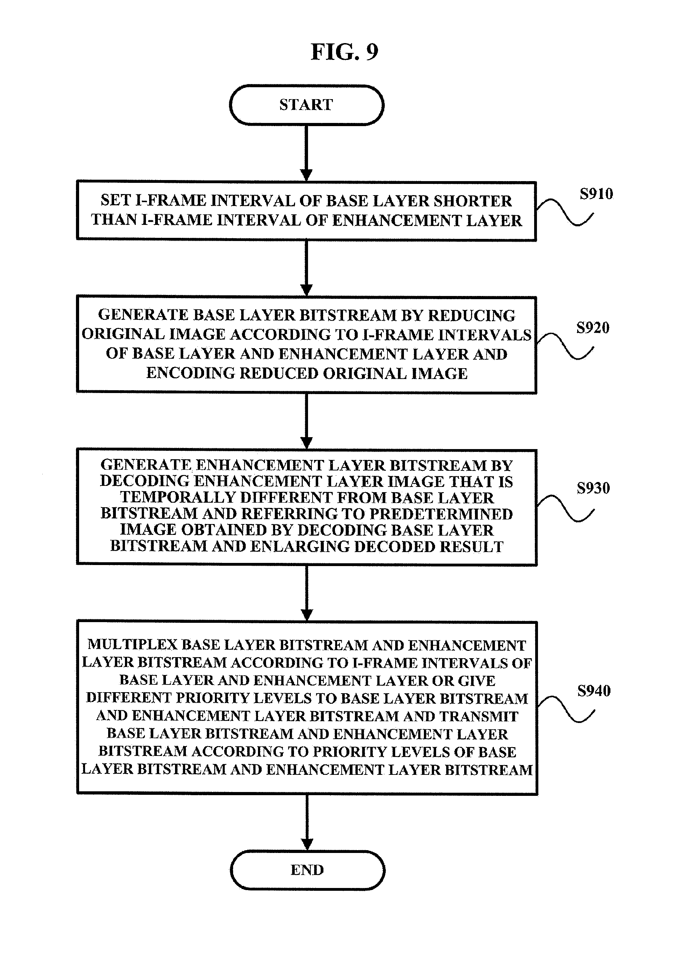

Figure 9 is a flowchart for explaining a video encoding method according to the present invention, which is capable of minimising a delay in random access; and

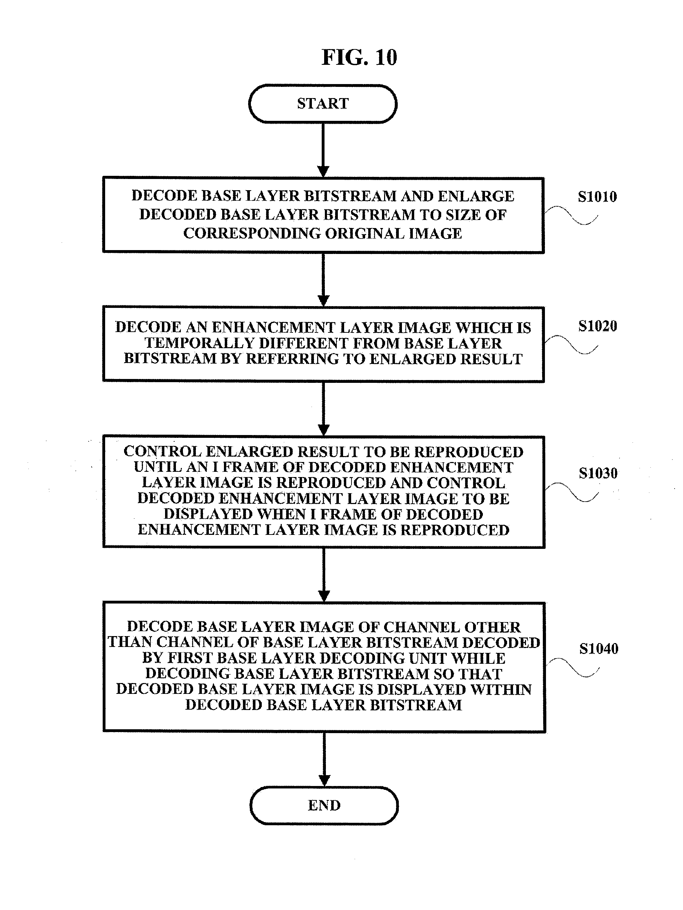

Figure 10 is a flowchart for explaining a video decoding method according to the present invention, which is capable of minimising a delay in random access.

A video encoding method according to the present invention is based on the principles of the conventional spatial layer encoding method described above with reference to Figure 2. Therefore, the video encoding method according to the present invention will now be described focusing only on the differences from the conventional spatial layer encoding method of Figure 2.

Referring to Figures 5 and 9, in operation S910, an encoding control unit 540 may set the I-frame interval of a base layer shorter than the I-frame interval of an enhancement layer. The random access delay becomes shorter when the an intra refresh operation is performed more frequently. For example, the encoding control unit 540 may set the I-frame interval of the base layer and the I-frame interval of the enhancement layer to 3 and 15, respectively, so that an intra refresh operation is performed every 3 frames in the base layer and is performed every 15 frames in the enhancement layer. Therefore, the random access delay can be reduced to 3/15, i.e., 1/5, of the random access delay in the prior art.

The encoding control unit 540 sets the I-frame intervals of the base layer and the enhancement layer so that an I frame of the base layer and a corresponding I frame of the enhancement layer are temporally different. In general, a bit rate ratio among I, P, and B frames is about 8:3:2. Thus, if I frames of the base layer and the enhancement layer are located on the same time axis, a bit rate at the time axis where the I frames coexist may become excessively high. Thus, the bit rate for I frames may be much higher than the bit rate for P or B frames. However, in embodiments of the present invention, the I-frame intervals of the base layer and the enhancement layer are set so that an I frame of the base layer and a corresponding I frame of the enhancement layer are temporally different.

Figure 8 is a graph for comparing bit rates obtained using the video encoding method according to an embodiment of the invention with bit rates obtained using a conventional video encoding method. Referring to Figure 8, a bit rate ratio between I, P, and B frames in a group of pictures (GOP) is set to be 8:3:2, and a bit rate ratio between a base layer and an enhancement layer is set to be 60:40. A total number of bits in a GOP is 28. Therefore, in the present invention, the size in bits of an I frame, which is a first frame of a GOP, is about 5.5, while, in the prior art, the size in bits of an I frame is 8. Therefore, a peak bit rate obtained using embodiments of the present invention is about 30% lower than a peak bit rate obtained using the prior art.

In operation S920, a base layer encoding unit 510 may reduce an original image according to the I-frame intervals set by the encoding control unit 540, thereby generating a base layer bitstream. The base layer encoding unit 510 may arbitrarily set the reduce rate for the original image. For convenience of calculation or for simplification of structure, the base layer encoding unit 510 may set the reduced ratio for the original image to 2:1, 4:1 or 8:1.

In operation S930, an enhancement layer encoding unit 520 may generate an enhancement layer bitstream by referring to a predetermined enlarged image obtained by decoding the base layer bitstream, and an enhancement layer image which is at a temporal position different from the current enhancement layer to be coded. Here, the enhancement layer image which is temporally different from the current enhancement layer image to be currently coded implies one obtained after encoding an image that is temporally different from the enhancement layer image to be currently encoded and decoding the image. In general, instead of using an open-loop scheme, a closed-loop scheme may be used. That is, a decode frame may be used as a reference frame. Referring to a temporally different image means motion compensated temporal prediction. Referring to an enlarged image after decoding the bitstream of a base layer (BL) implies intra BL prediction is performed.

In operation S940, a transmission unit 530 may multiplex the base layer bitstream and the enhancement layer bitstream according to the I-frame intervals set by the encoding control unit 540 or allocate different priority levels to the base layer bitstream and the enhancement layer and then transmit the base layer bitstream and the enhancement layer to a video decoding apparatus according to the present invention according to the priority levels of the base layer bitstream and the enhancement layer.

Figure 6 is a block diagram of a video decoding apparatus according to the present invention, and Figure 10 is a flowchart for explaining a video decoding method according to the present invention.

Referring to Figures 6 and 10, in operation S1010, a first base layer decoding unit 610 may receive a base layer bitstream from a transmission unit 530, decode the base layer bitstream, enlarge the decoded result to the size of the original image, and transmit the enlarged result to an enhancement layer decoding unit 630. The enlarged result may be used for decoding enhancement layer I frames (EI) or for concealing data loss occurring in an enhancement layer.

In operation S1020, the enhancement layer decoding unit 630, which has received the enlarged result from the first base layer decoding unit 610, may decode a current enhancement layer image by referring to the enlarged result and an enhancement layer image which is temporally different from the base layer bitstream.

In operation S1030, a decoding control unit 640 may control the first base layer decoding unit 610 to enlarge the decoded base layer image, display the enlarged result, and abandon an enhancement layer bitstream until an I frame of the decoded enhancement layer image is reproduced. In addition, in operation S1030, the decoding control unit 640 may control a frame display unit 650 to display the decoded enhancement layer image as soon as the reproduction of the I frame of the decoded enhancement layer image begins. Moreover, if data loss occurs in the enhancement layer bitstream, the decoding control unit 640 may control the data loss to be concealed using information from an enhancement layer frame which is not temporally aligned with the enhancement layer bitstream or information regarding the enlarged result obtained by the first base layer decoding unit 610. In this case, since a base layer bitstream is given a higher priority level than an enhancement layer bitstream and is thus transmitted prior to the transmission of the enhancement layer bitstream, data loss is less likely to occur in the base layer bitstream than in the enhancement layer bitstream. Therefore, simple image data with large movement is encoded as a base layer bitstream, and complicated image data with small movement is encoded as an enhancement layer bitstream.

In operation S1040, while the first base layer decoding unit 610 decodes the base layer bitstream, a second base layer decoding unit 620 may decode a base layer image of a channel other than the channel of the base layer bitstream decoded by the first base layer decoding unit 610 in order to realise Picture in Picture (PIP) in which an image is inserted into an image currently being displayed. Thereafter, the second base layer decoding unit 620 may transmit the decoded base layer image to the frame display unit 650. In PIP, there is no restriction regarding the number of images that can be simultaneously displayed, a main image displayed on an entire frame is obtained by decoding both a corresponding base layer bitstream and a corresponding enhancement layer bitstream, and a minor image displayed within the main image is obtained by decoding only a corresponding base layer bitstream.

Referring to Figure 7, I and P frames indicated by small rectangles represent base layer frames, and EI, B, and P frames indicated by large rectangles represent enhancement layer frames. An EI frame is encoded by referring to an I frame belonging to a base layer. In the prior art, the GOP determines the amount of random access delay time, and random access delay time amounts to an average of half the GOP. On the other hand, in exemplary embodiments of the present invention, random access delay time amounts to an average of half the I-frame interval N of a base layer and thus is shorter than the random access delay time produced in the prior art by N/GOP. In other words, if the 1-frame interval N of a base layer and the GOP are 3 and 9, respectively, as illustrated in Figure 7, random access delay time can be reduced to 3/9, i.e., 1/3, of the random access delay time in the prior art.

Using this, it is possible to minimise an increase in bit rate in random access and hence minimise an increase in random access delay time by setting the I-frame interval of a base layer shorter than the I-frame interval of an enhancement layer.

Accordingly, it is possible to prevent bit rate from becoming excessively high for I frames and thus achieve a uniform bit rate by setting the 1-frame intervals of a base layer and an enhancement layer so that an I frame of an enhancement layer and a corresponding I frame of a base layer temporally different. In addition, it is possible to conveniently realise Picture in Picture (PIP) by reducing the complexity of a PIP frame by 1/4 or more.

Moreover, when the bit rate considerably varies as in a wireless network or the Internet, only a base layer bitstream can be transmitted in consideration of the circumstances in a network.

## Claims

1. A video encoding apparatus, comprising:
an encoding control unit (540) operable to set an I-frame interval of a base layer shorter than an I-frame interval of an enhancement layer;
a base layer encoding unit (530) operable to generate a base layer bitstream by reducing and encoding an original image according to the I-frame interval set by the encoding control unit; and
an enhancement layer encoding unit (520) operable to generate an enhancement layer bitstream having an I-frame interval longer than an I-frame interval of the base layer bitstream..

2. Apparatus according to claim 1, wherein the base layer encoding unit (530) is operable to generate the base layer bitstream by reducing and encoding an original image according also to the enhancement layer 1-frame interval set by the encoding control unit, and the enhancement layer encoding unit (520) is operable to generate the enhancement layer bitstream by decoding an enhancement layer image which is not temporally aligned with the base layer bitstream and referring to a predetermined image obtained by decoding the base layer bitstream and enlarging the decoded result.

3. The apparatus of either preceding claim, further comprising a transmission unit (530) which is operable to multiplex the base layer bitstream and the enhancement layer bitstream either according to the I-frame intervals set by the encoding control unit or by giving different priority levels to the base layer bitstream and the enhancement layer bitstream, and being operable to transmit the base layer bitstream and the enhancement layer bitstream according to the priority levels.

4. The apparatus of any preceding claim, wherein the encoding control unit is operable to set an I frame of the enhancement layer to be temporally different from a corresponding I frame of the base layer.

5. A video encoding method, comprising:
setting an I-frame interval of a base layer shorter than an I-frame interval of an enhancement layer;
generating a base layer bitstream by reducing and encoding an original image according to the I-frame intervals of the base layer and the enhancement layer; and generating an enhancement layer bitstream having an I-frame interval longer than an I-frame interval of the base layer bitstream..

6. A video decoding apparatus, comprising:
a first base layer decoding unit (610) operable to decode a base layer bitstream and to enlarge the decoded base layer bitstream;
an enhancement layer decoding unit (630) operable to decode an enhancement layer image which is temporally different from the base layer bitstream by referring to the enlarged result; and
a decoding control unit (640) operable in response to an I-frame of the decoded enhancement layer image being reproduced to control the decoded enhancement layer image to be displayed.

7. The apparatus of claim 6, further comprising a second base layer decoding unit (620) operable to decode a base layer image of a channel other than the channel of the base layer bitstream decoded by the first base layer decoding unit while the first base layer decoding unit decodes the base layer bitstream so that the base layer image decoded by the second base layer decoding unit is displayed within the base layer bitstream decoded by the first base layer decoding unit.

8. The apparatus of claim 6 or claim 7, wherein, , the decoding control unit is responsive to data loss occurring in the enhancement layer bitstream to conceal the data loss using information of the enlarged result.

9. The apparatus of any of claims 6 to 8, wherein the decoding control unit is responsive to data loss occurring in the enhancement layer bitstream to conceals the data loss using information of an enhancement layer image which is temporally different from the base layer bitstream.

10. A video decoding method, comprising:
decoding a base layer bitstream and enlarging the decoded base layer bitstream to the size of a corresponding original image;
decoding an enhancement layer image which is temporally different from the base layer bitstream by referring to the enlarged result; and
in response to an I frame of the decoded enhancement layer image being reproduced, controlling the decoded enhancement layer image to be displayed.
